# DEMANDE DE BREVET EUROPEEN

(11) **EP 2 266 788 A1**
(43) Date de publication de la demande: **29.12.2010**
(21) Numéro de dépôt: 09163904.7
(22) Date de dépôt: 26.06.2009
(51) Int. Cl.: B29C 70/86, F16C 7/00, B29C 65/00

(54) **Procédé de fabrication de bielles composites et bielles obtenues selon le procédé**

(71) Demandeur: S.A. BD INVENT, 4682 Heure-le-Romain (Oupeye), Liege (BE)
(72) Inventeur: S.A. BD INVENT, 4682 Heure-le-Romain (Oupeye), Liege (BE)
(74) Mandataire: Lerho, Marc J. A.

(57) **Abrégé**

La présente invention se rapporte à un procédé de fabrication d'une bielle comportant un corps de bielle en matériau composite et au moins un embout, ledit embout comportant successivement une première partie cylindrique creuse (1), une partie conique (3) et une seconde partie cylindrique creuse (4), ladite seconde partie cylindrique (4) se terminant par une extrémité de diamètre extérieur réduit (5) délimitée par un épaulement (6), ledit corps de bielle étant réalisé par enroulement de fibres préimprégnées et enserrant l'embout sur toute sa surface latérale externe.

## Description

### Objet de l'invention

La présente invention se rapporte à un procédé de fabrication de bielles composites. Elle se rapporte plus particulièrement mais non exclusivement à un procédé de fabrication de bielles utilisables dans le domaine aéronautique.

L'invention se rapporte également aux bielles obtenues selon le procédé.

### Etat de la technique

Il est connu qu'une bielle est un composant soit raidissant, soit de transmission de mouvement. Les efforts qui vont être transmis par la bielle sont principalement des efforts de traction, de compression et de flexion sur base du couple résistif en bout de bielle.

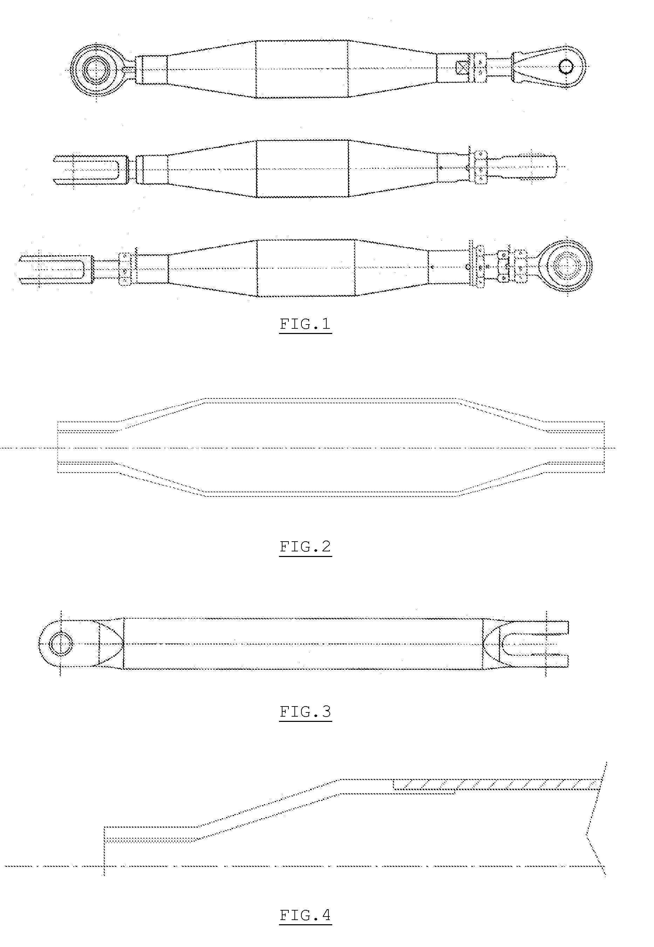

Dans le domaine aéronautique, on fait usage d'un nombre élevé de bielles. On peut citer l'utilisation de bielles dans les organes de commande de vol, du train d'atterrissage, d'ouverture des portes, etc. A titre illustratif, la figure 1 représente un schéma général de bielle avec différents moyens non-exhaustifs de fixation aux extrémités; ces moyens assurent la fixation de la bielle aux organes auxquels elle doit transmettre un mouvement ou desquels elle doit recevoir un mouvement ou assurer une fixation.

La bielle est un composant qui doit avoir un rapport tenue mécanique/poids le plus élevé possible. Pour ce faire, la bielle est de conception creuse et l'épaisseur des parois de la partie centrale du corps de bielle est plus fine que les parties situées aux extrémités où se trouve la fixation des embouts comme ce sera décrit ci-dessous (voir Fig.2). Dans leur conception la plus commune, les bielles sont réalisées en aluminium ou en inox selon leur application.

Il existe également sur le marché des bielles en matériau composite.

Elles peuvent être de type monobloc tel que montré à la figure 3. Le procédé de fabrication d'une telle bielle est décrit dans le document FR 2 705 610 A1. Le procédé consiste à déposer des fibres pré-imprégnées sur un mandrin extractible de forme correspondant à celle de la bielle. L'ensemble obtenu est alors polymérisé avec application d'une pression homogène sur toute la surface externe de l'ensemble et, finalement, après extraction du mandrin, la bielle est usinée aux cotes requises. Ce procédé est relativement onéreux et nécessite la présence d'un mandrin de forme complexe et son retrait.

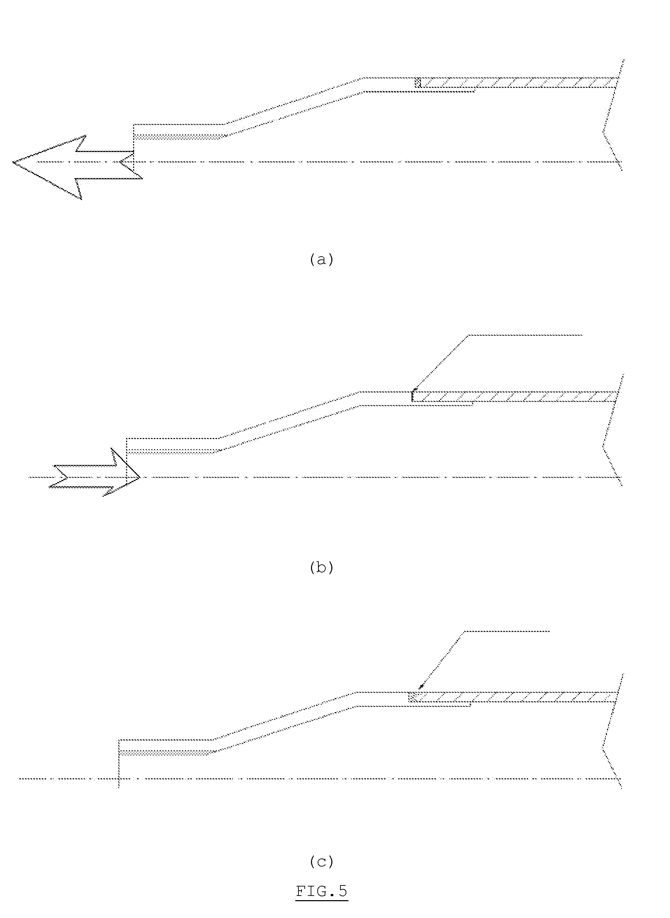

Elles peuvent également être d'un autre type avec un embout métallique rapporté et collé au corps de bielle composite (voir Fig.4, le corps de bielle et l'embout sont respectivement représentés avec et sans hachures). Un tel assemblage a pour désavantage de fragiliser le corps de bielle. Lors de la traction sur l'embout métallique de la bielle, la colle travaille de manière élastique et provoque un espacement entre l'embout métallique et la partie en composite (voir Fig.5a). Lors de la compression de l'embout sur la bielle, la colle travaille toujours de manière élastique et provoque un appui entre l'embout métallique et la partie en composite (voir Fig.5b). En cycle de fatigue, ce phénomène va générer de la fissuration sur le corps de bielle composite et réduire de manière importante la durée de vie de la bielle (voir Fig. 5c).

### Buts de l'invention

La présente invention vise à fournir une solution qui permette de s'affranchir des inconvénients de l'état de la technique.

En particulier, la présente invention a pour but de réaliser des bielles à partir d'un procédé proche des procédés traditionnels mais générant des coûts de fabrication faibles tout en évitant les inconvénients d'un assemblage collé.

### Principaux éléments caractéristiques de l'invention

La présente invention se rapporte à un procédé de fabrication d'une bielle comportant un corps de bielle en matériau composite et au moins un embout, ledit embout comportant successivement une première partie cylindrique creuse, une partie conique et une seconde partie cylindrique creuse, ladite seconde partie cylindrique se terminant par une extrémité de diamètre extérieur réduit délimitée par un épaulement, ledit procédé comportant successivement au moins les étapes suivantes :
a) on réalise un corps intérieur au moyen des sous- étapes suivantes :
   - on réalise un tube par enroulement de fibres pré-imprégnées sur un premier mandrin en rotation, ledit tube ayant une paroi d'épaisseur égale à la hauteur de l'épaulement,
   - on polymérise le tube,
   - on retire le premier mandrin du tube,
   - on met à longueur et on dépolit le tube formant ainsi le corps intérieur ;
b) on rapporte une extrémité du corps intérieur à l'extrémité de diamètre extérieur réduit de chaque embout, ladite extrémité du corps intérieur prenant appui sur l'épaulement de l'embout ;
c) on insère une première partie d'un second mandrin dans la partie cylindrique creuse de chaque embout et on place un mors d'entraînement à l'extrémité libre d'une seconde partie du second mandrin ;
d) on enroule des fibres pré-imprégnées sur la surface externe d'un ensemble formé par le corps intérieur, le ou les embout(s) et la ou les seconde(s) partie(s) du ou des second(s) mandrin(s) exempte(s) de mors, lesdites fibres formant alors un corps extérieur ;
e) après retrait du ou des mors, on polymérise le corps intérieur et le corps extérieur pour former un corps monobloc polymérisé ;
f) on retire le ou les second (s) mandrin (s) et on met à longueur le corps monobloc polymérisé.

Selon des modes particuliers de l'invention, le procédé comporte au moins une ou une combinaison appropriée des caractéristiques suivantes :
- la partie cylindrique creuse de l'embout est munie de moyens de fixation de la bielle ;
- la première partie du second mandrin est cylindrique et a un diamètre sensiblement égal au diamètre intérieur de la première partie cylindrique de l'embout et la seconde partie du second mandrin est cylindrique et a un diamètre sensiblement égal au diamètre extérieur de la première partie cylindrique de l'embout ;
- la mise à longueur du corps monobloc polymérisé s'effectue par découpe à hauteur de l'extrémité libre de chaque embout ;
- la partie conique de l'embout a une épaisseur de paroi allant en s'affinant vers la seconde partie cylindrique ;
- le premier mandrin est cylindrique ;
- l'embout est métallique ;
- l'embout est en matériau plastique à haute résistance ;
- l'embout est en carbone ;
- les fibres sont des fibres de carbone ;
- l'embout comporte des sillons de tournage sur sa surface latérale externe.

La présente invention se rapporte également à une bielle comportant un corps de bielle en matériau composite et au moins un embout, ledit embout comportant successivement une première partie cylindrique creuse, une partie conique et une seconde partie cylindrique creuse, ladite seconde partie cylindrique se terminant par une extrémité avec un diamètre extérieur réduit délimitée par un épaulement, et, ledit corps de bielle comportant un corps monobloc polymérisé enserrant l'embout métallique sur toute sa surface latérale externe.

### Brève description des figures

La figure 1, déjà mentionnée, représente le schéma général de bielles métalliques selon l'état de la technique avec différents moyens de fixation de la bielle.

La figure 2, déjà mentionnée, représente une vue en coupe d'une bielle selon l'état de la technique, illustrant la variation de l'épaisseur des parois.

La figure 3, déjà mentionnée, représente une vue en coupe d'une bielle de type monobloc selon l'état de la technique.

La figure 4, déjà mentionnée, représente une vue en coupe partielle d'un corps de bielle avec embouts rapportés et collés selon l'état de la technique.

La figure 5, déjà mentionnée, représente schématiquement les sollicitations en traction (Fig.5a) et compression (Fig.5b) dans un corps de bielle avec embouts rapportés et collés selon l'état de la technique ainsi que les dégâts qui en résultent (Fig.5c).

La figure 6 représente une vue en coupe partielle d'un embout selon l'invention présentant des sillons de tournage.

La figure 7 représente une vue en coupe d'un embout utilisé lors de la fabrication de la bielle selon l'invention.

La figure 8 représente une vue de côté de la réalisation du corps intérieur par enroulement filamentaire selon l'invention (étape a)).

La figure 9 représente une vue en coupe du corps intérieur obtenu à l'étape a).

La figure 10 représente une vue en coupe de l'assemblage des embouts avec le corps intérieur (étape b)).

La figure 11 représente une vue en coupe du montage des mandrins dans l'étape c).

La figure 12 représente une vue en coupe du montage des mors d'entraînement dans l'étape c).

La figure 13 représente une vue en coupe de la réalisation du corps extérieur dans l'étape d) par enroulement filamentaire.

La figure 14 représente des vues en coupe de l'ensemble avant (a) et après polymérisation (b) dans l'étape e).

La figure 15 représente une vue en coupe de la pièce (bielle) finie après enlèvement des mandrins et une opération de découpe (étape f)).

La figure 16 représente schématiquement les sollicitations en compression (a) et en traction (b) dans la bielle réalisée selon l'invention.

### Légende

(1) Première partie cylindrique de l'embout
(2) Taraudage
(3) Partie conique de l'embout
(4) Seconde partie cylindrique de l'embout
(5) Extrémité de la seconde partie cylindrique de l'embout avec un diamètre extérieur réduit
(6) Epaulement
(7) Fibres pré-imprégnées
(8) Premier mandrin utilisé pour la fabrication du corps intérieur
(9) Corps intérieur
(10) Second mandrin utilisé pour la fabrication du corps extérieur
   (10a) Première partie du second mandrin (10)
   (10b) Seconde partie du second mandrin (10)
(11) Mors d'entrainement
(12) Corps extérieur
(13) Corps monobloc polymérisé

### Description d'une forme d'exécution préférée de l'invention

La conception de la bielle selon l'invention se situe à mi-chemin entre la bielle monobloc et la bielle avec embout métallique rapporté et collé.

Dans la présente invention, la bielle comporte un corps de bielle composite et au moins un embout. La bielle peut comporter un embout à chaque extrémité ou comporter un embout à une seule extrémité et à l'autre extrémité un roulement serti directement dans la bielle. Les figures ci-dessous illustreront le procédé selon l'invention dans le cas où les deux extrémités comportent un embout.

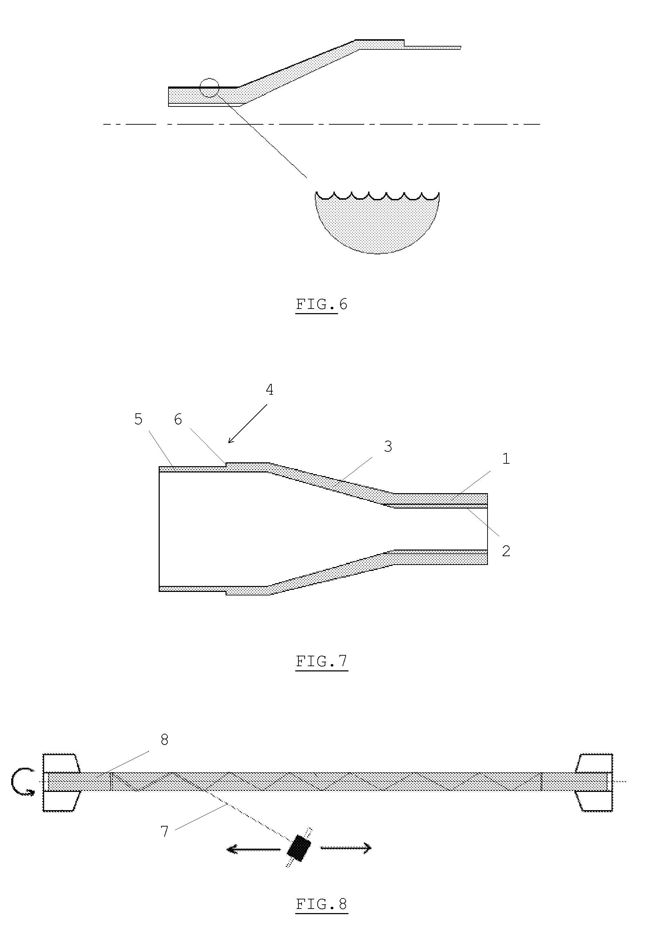

Les embouts métalliques (par ex. en aluminium, en inox 17-4 ou en titane) sont usinés de manière traditionnelle ; ils présentent sur leur surface externe des sillons de tournage réalisés lors du tournage avec une forte avance (voir Fig.6). Ces sillons vont permettre l'accrochage entre l'embout et la fibre de renfort de la bielle.

Les embouts selon l'invention peuvent également être en matériau plastique à haute résistance, en carbone ou dans tout autre matériau approprié pour l'application visée.

La figure 7 présente les différentes parties constituant l'embout. Chaque embout présente une première partie cylindrique creuse 1 qui constitue l'extrémité libre de l'embout après assemblage avec le corps de bielle. Cette première partie est munie de moyens de fixation de la bielle. Dans l'exemple illustré, la face intérieure du cylindre est taraudée (taraudage 2) pour recevoir ultérieurement un élément de fixation de la bielle. L'élément de fixation peut également faire partie intégrante de l'embout ; l'embout peut, par exemple, être en forme de fourche (non représenté).

L'embout comporte à la suite de la première partie cylindrique 1, une partie conique 3 creuse d'épaisseur de paroi allant en s'affinant vers une seconde partie cylindrique creuse 4 destinée à être assemblée au corps de bielle. La seconde partie cylindrique 4 se termine par une extrémité de diamètre extérieur réduit 5 délimitée par un épaulement 6.

L'embout pourra revêtir toute autre forme utile pour la réalisation du procédé selon l'invention tel que décrit ci-dessous.

Selon la présente invention, la bielle est fabriquée en six étapes.

Une première étape a) consiste à réaliser un corps intérieur par le procédé traditionnel d'enroulement filamentaire qui consiste à enrouler une fibre pré-imprégnée 7 sur un mandrin lisse 8 avec un angle donné sur base d'un mouvement de va-et-vient comme illustré à la figure 8. Préférentiellement, les fibres enroulées sont des fibres en carbone. Cependant, toute autre fibre à haute résistance pourra également convenir.

On réalise un tube d'épaisseur égale à la hauteur de l'épaulement 6 précité. Le diamètre intérieur du tube est fixé par le diamètre intérieur du corps de la bielle à réaliser et sur base de calculs de dimensionnement déterminant la charge maximale en compression que le tube peut supporter sans se déformer au niveau de la zone d'appui entre l'embout et le tube, c'est-à-dire au niveau de l'épaulement.

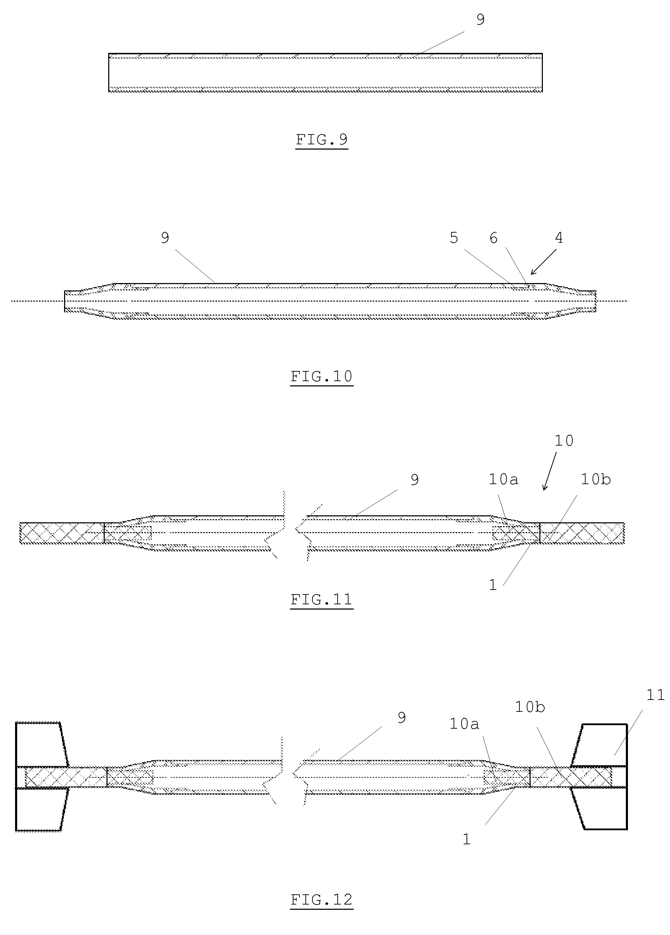

L'ensemble tube et mandrin est ensuite disposé dans un four pour polymériser la résine pré-imprégnée dans les fibres et ainsi rigidifier le tube. Après la polymérisation, le mandrin 8 est retiré et le tube est mis à longueur et dépoli pour obtenir une surface d'accrochage. Le corps intérieur 9 ainsi obtenu est représenté à la figure 9.

Une seconde étape b) consiste à rapporter un embout à chaque extrémité du corps intérieur. L'extrémité du corps intérieur 9 est rapportée sur l'extrémité de diamètre extérieur réduit 5 et prend appui sur l'épaulement 6. De cette manière, la surface externe du corps intérieur 9 prolonge celle de la seconde partie cylindrique 4 des embouts (voir fig. 10).

Dans une troisième étape c), deux mandrins 10 sont montés respectivement aux extrémités libres des embouts (voir Fig.11). Chaque mandrin de forme cylindrique comporte deux parties de diamètres différents. Une première partie 10a du mandrin comporte un cylindre de diamètre sensiblement égal au diamètre intérieur de la première partie cylindrique des embouts 1 et une seconde partie 10b comporte un cylindre de diamètre sensiblement égal au diamètre extérieur de la première partie cylindrique des embouts 1. Durant le montage, la première partie 10a du mandrin 10 est insérée dans la partie cylindrique creuse 1 de l'embout. Un mors d'entrainement 11 est ensuite disposé à l'extrémité libre de la seconde partie 10b du mandrin 10 (voir fig.12).

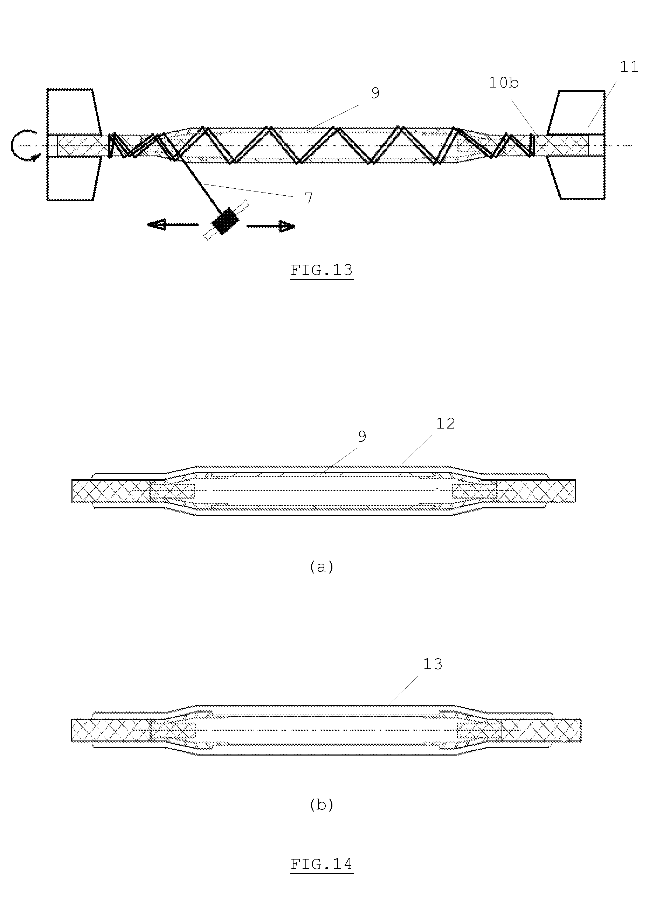

La quatrième étape d) représentée à la figure 13 consiste à enrouler sur la surface externe de l'ensemble formé par le corps intérieur 9, les embouts, et la seconde partie 10b des mandrins dépourvue de mors, des fibres pré-imprégnées par le procédé d'enroulement filamentaire. Les fibres vont former une couche autour de cet ensemble que l'on désignera corps extérieur 12 (voir Fig.14a). De manière à réaliser ultérieurement un corps monobloc comme décrit ci-dessous, les fibres pré-imprégnées utilisées dans cette étape sont les mêmes que celles utilisées dans l'étape a).

La cinquième étape e) consiste, après retrait des mors d'entrainement 11, à polymériser l'ensemble. Les figures 14a et 14b présentent respectivement l'ensemble avant et après polymérisation. Après polymérisation, le corps intérieur 9 et le corps extérieur 12 forment un corps monobloc polymérisé 13 qui constituera le corps de bielle.

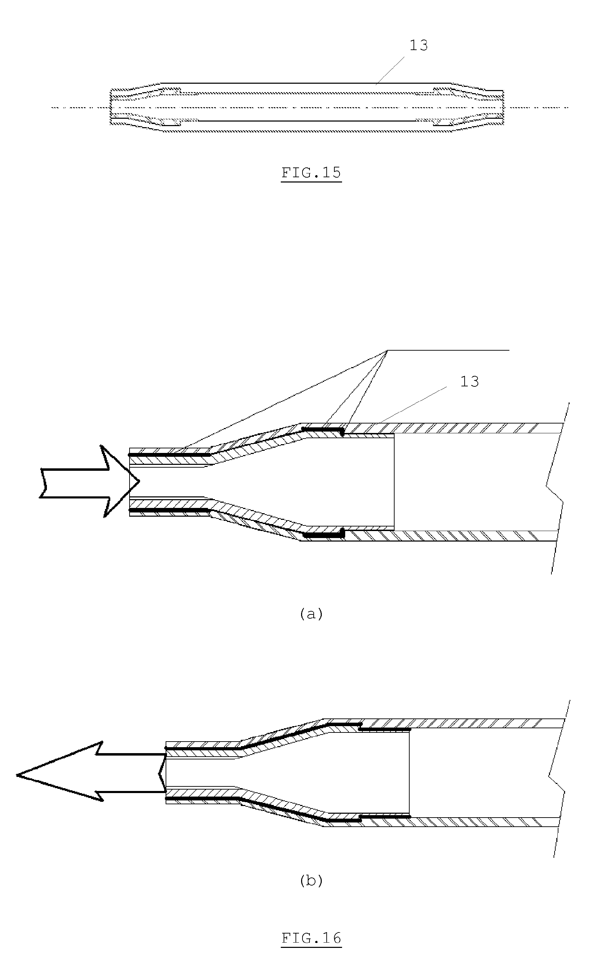

Dans la dernière étape f), les mandrins 10 sont retirés et le corps monobloc polymérisé 13 est découpé à hauteur de l'extrémité libre des embouts (voir Fig.15). La pièce ainsi obtenue forme la bielle selon l'invention.

### Avantages du procédé selon l'invention

Contrairement à l'assemblage collé de l'état de la technique où les embouts sont accolés au corps de bielle, dans la présente invention, les embouts sont insérés à l'intérieur du corps de bielle. Cette conception de bielle va permettre de reprendre les efforts de compression. En effet, les zones surlignées dans la figure 16a sont, d'une part, sollicitées par effet d'accrochage entre l'embout et le corps de bielle et sont, d'une autre part, sollicitées par appui direct entre le corps de bielle en fibre de carbone et l'embout au niveau de l'épaulement. De même, la conception de la bielle selon l'invention va permettre de reprendre les efforts de traction (voir Fig.16b). Dans le cadre de l'effort en traction, l'embout transmet l'effort au corps de bielle par les surfaces cylindriques parallèles à l'axe du corps de bielle et par la partie conique. L'effort de traction est donc directement transmis au corps de bielle. Dans le cadre d'une sollicitation alternée en traction-compression, l'embout ne peut se déplacer dans le corps de bielle et ainsi ne peut générer un phénomène de fatigue sur le corps en fibre de carbone et de matage du corps en fibre de carbone.

Le procédé selon l'invention permet de réaliser une pièce complexe par des procédés traditionnels d'enroulement filamentaire, ce qui génère des coûts de fabrication faibles. Le gain se situe dans la mise en oeuvre des procédés et dans la conception elle-même de la bielle.

## Revendications

1. Procédé de fabrication d'une bielle comportant un corps de bielle en matériau composite et au moins un embout, ledit embout comportant successivement une première partie cylindrique creuse (1), une partie conique (3) et une seconde partie cylindrique creuse (4), ladite seconde partie cylindrique (4) se terminant par une extrémité de diamètre extérieur réduit (5) délimitée par un épaulement (6), ledit procédé comportant successivement au moins les étapes suivantes :
a) on réalise un corps intérieur (9) au moyen des sous-étapes suivantes :
- on réalise un tube par enroulement de fibres pré-imprégnées (7) sur un premier mandrin (8) en rotation, ledit tube ayant une paroi d'épaisseur égale à la hauteur de l'épaulement (6),
- on polymérise le tube,
- on retire le premier mandrin (8) du tube,
- on met à longueur et on dépolit le tube formant ainsi le corps intérieur (9) ;
b) on rapporte une extrémité du corps intérieur (9) à l'extrémité de diamètre extérieur réduit de chaque embout (5), ladite extrémité du corps intérieur (9) prenant appui sur l'épaulement (6) de l'embout ;
c) on insère une première partie (10a) d'un second mandrin (10) dans la partie cylindrique creuse (1) de chaque embout et on place un mors d'entraînement (11) à l'extrémité libre d'une seconde partie (10b) du second mandrin (10) ;
d) on enroule des fibres pré-imprégnées (7) sur la surface externe d'un ensemble formé par le corps intérieur (9), le ou les embout(s) (1,3,4) et la ou les seconde(s) partie(s) (10b) du ou des second(s) mandrin(s) (10) exempte(s) de mors (11), lesdites fibres (7) formant alors un corps extérieur (12) ;
e) après retrait du ou des mors (11), on polymérise le corps intérieur (9) et le corps extérieur (12) pour former un corps monobloc polymérisé (13) ;
f) on retire le ou les second(s) mandrin(s) (10) et on met à longueur le corps monobloc polymérisé (13).

2. Procédé selon la revendication 1, **caractérisé en ce que** la partie cylindrique creuse (1) de l'embout est munie de moyens de fixation de la bielle.

3. Procédé selon l'une quelconque des revendications précédentes, **caractérisé en ce que** la première partie (10a) du second mandrin (10) est cylindrique et a un diamètre sensiblement égal au diamètre intérieur de la première partie cylindrique (1) de l'embout et **en ce que** la seconde partie (10b) du second mandrin (10) est cylindrique et a un diamètre sensiblement égal au diamètre extérieur de la première partie cylindrique (1) de l'embout.

4. Procédé selon l'une quelconque des revendications précédentes, **caractérisé en ce que** la mise à longueur du corps monobloc polymérisé (13) s'effectue par découpe à hauteur de l'extrémité libre de chaque embout.

5. Procédé selon l'une quelconque des revendications précédentes, **caractérisé en ce que** la partie conique (3) de l'embout a une épaisseur de paroi allant en s'affinant vers la seconde partie cylindrique (4).

6. Procédé selon l'une quelconque des revendications précédentes, **caractérisé en ce que** le premier mandrin (8) est cylindrique.

7. Procédé selon l'une quelconque des revendications précédentes, **caractérisé en ce que** l'embout est métallique.

8. Procédé selon l'une quelconque des revendications précédentes, **caractérisé en ce que** l'embout est en matériau plastique à haute résistance.

9. Procédé selon l'une quelconque des revendications précédentes, **caractérisé en ce que** l'embout est en carbone.

10. Procédé selon l'une quelconque des revendications précédentes, **caractérisé en ce que** les fibres (7) sont des fibres de carbone.

11. Procédé selon l'une quelconque des revendications précédentes, **caractérisé en ce que** l'embout comporte des sillons de tournage sur sa surface latérale externe.

12. Bielle comportant un corps de bielle en matériau composite et au moins un embout, ledit embout comportant successivement une première partie cylindrique creuse (1), une partie conique (3) et une seconde partie cylindrique creuse (4), ladite seconde partie cylindrique (4) se terminant par une extrémité avec un diamètre extérieur réduit (5) délimitée par un épaulement (6), et, ledit corps de bielle comportant un corps monobloc polymérisé (13) enserrant l'embout métallique sur toute sa surface latérale externe (1,3,4).
